# FASCICULE DE BREVET EUROPEEN

(11) **EP 3 715 607 B1**
(45) Date de publication et mention de la délivrance du brevet: **23.02.2022**
(21) Numéro de dépôt: 20163254.4
(22) Date de dépôt: 16.03.2020
(51) Int. Cl.: F02C 7/32

(54) **PIGNON D ENTRAINEMENT D'AU MOINS UN ARBRE D'ACCESSOIRE POUR UN BOITIER D'ACCESSOIRES DE TURBOMACHINE D'AERONEF**
ANTRIEBSRITZEL MINDESTENS EINER NEBENAGGREGATSWELLE FÜR EIN HILFSGETRIEBE EINES LUFTFAHRZEUG-TURBOTRIEBWERKS
DRIVING PINION OF AT LEAST ONE ACCESSORY SHAFT FOR AN ACCESSORIES UNIT OF AN AIRCRAFT TURBINE ENGINE

(30) Priorité: 25.03.2019 FR 1903058
(43) Date de publication de la demande: 30.09.2020
(73) Titulaire: Safran Transmission Systems, 92700 Colombes (FR)
(72) Inventeur: GOUIN, Gilles, Gaston, Jacques, 77550 MOISSY-CRAMAYEL (FR); LAISNEZ, Frédéric, Nicolas, François, 77550 MOISSY-CRAMAYEL (FR); PETTINOTTI, Serge, Dominique, 77550 MOISSY-CRAMAYEL (FR)
(74) Mandataire: Gevers & Orès

(56) Documents cités:
- WO-A1-2014/202874
- WO-A1-2015/177487

## Description

### Domaine technique de l'invention

L'invention concerne un pignon d'entraînement pour un boîtier d'accessoires pour une turbomachine d'aéronef, ce boîtier d'accessoires étant couramment appelé AGB (acronyme de *Accessory Gear Box*).

### Arrière-plan technique

L'arrière-plan technique comprend notamment les documents WO-A1-2015/177487 et WO-A1-2014/202874.

Les moteurs à turbine à gaz d'avions ou d'hélicoptères comportent généralement un boîtier pour l'entraînement de plusieurs accessoires de la turbine ou d'équipements annexes, tels que notamment diverses pompes pour la production d'énergie hydraulique, l'alimentation en carburant, la lubrification, des générateurs électriques pour la production de puissance électrique, etc. Un tel boîtier est communément appelé AGB.

De façon connue en soi, un boîtier pour l'entraînement d'accessoires comporte un ou plusieurs trains d'engrenages qui sont composés chacun de plusieurs roues dentées et qui sont entraînés en rotation par un arbre de transmission de puissance, ce dernier étant couplé à un arbre de la turbine. Chaque accessoire est généralement monté contre l'une des faces latérales du boîtier et comporte un arbre d'entrainement venant se coupler sur l'une des roues dentées du ou des trains d'engrenages.

Lors du fonctionnement de la turbine, une partie de la puissance mécanique générée est prélevée sur l'arbre de turbine et transmise via l'arbre de transmission de puissance et les trains d'engrenages aux différents accessoires montés sur le boîtier pour les actionner.

Les boîtiers pour l'entraînement d'accessoires varient en termes d'architecture notamment en fonction du nombre et de la nature des accessoires à entrainer.

Lors de l'élaboration d'un boîtier d'entraînement d'accessoires, il est toutefois important de réduire le plus possible l'encombrement et la masse du boîtier, notamment en jouant sur le positionnement des accessoires les uns par rapport aux autres en fonction de leur encombrement individuel et de leur vitesse de rotation. Or, les boîtiers pour l'entraînement d'accessoires connus à ce jour présentent généralement un encombrement et une masse trop importants.

Les roues dentées sont formées par des pignons qui sont utilisés pour entrainer les équipements et pour transmettre la puissance au reste de la chaine d'engrenages. Pour cela, les pignons comprennent des cannelures internes d'accouplement à des cannelures complémentaires des arbres des accessoires.

Dans certains cas, ces cannelures sont bombées, ce qui permet d'entrainer chaque accessoire malgré un défaut de coaxialité avec le boîtier. Le bombé réalisé permet en effet aux cannelures de rotuler et autorise ainsi des déplacements relatifs entre l'arbre de l'accessoire et le pignon.

Un manchon d'accouplement peut être utilisé entre le pignon et l'arbre de l'accessoire. Le manchon comprend des cannelures externes d'accouplement au pignon et des cannelures internes d'accouplement à l'arbre de l'accessoire. Le manchon assure l'accouplement entre l'arbre et le pignon et est généralement associé à un distributeur d'huile pour assurer une distribution d'huile au niveau ou à travers des cannelures en vue de leur lubrification.

La présente invention propose un perfectionnement de cette technologie, qui est simple, efficace et économique.

### Résumé de l'invention

L'invention propose un pignon d'entrainement d'au moins un arbre d'accessoire, pour un boîtier d'accessoires de turbomachine d'aéronef, ce pignon s'étendant autour d'un axe (A) et comportant un voile annulaire dont une périphérie externe comprend une denture externe et une périphérie interne est reliée à un corps tubulaire, le pignon comportant en outre un manchon disposé coaxialement à l'intérieur du corps tubulaire et comportant des premières cannelures rectilignes internes d'accouplement à un premier arbre d'un premier accessoire, le manchon étant apte se déplacer vis-à-vis du corps de façon à autoriser des déplacements relatifs entre le premier arbre et le pignon, caractérisé en ce que le manchon est formé d'une seule pièce avec le corps et est relié au corps par une membrane annulaire élastiquement déformable autorisant lesdits déplacements relatifs.

L'invention est particulièrement avantageuse car elle permet de simplifier le montage d'un pignon et de son manchon qui est désormais intégré au pignon. Par ailleurs, la fonction de distribution d'huile est simplifiée en étant intégrée avec le pignon. C'est la membrane élastique qui permet d'assurer la liaison du manchon au corps du pignon tout en autorisant des déplacements relatifs entre eux, notamment lors du rotulage du premier arbre vis-à-vis du pignon. Le pignon selon l'invention peut comprendre une ou plusieurs des caractéristiques suivantes, prises isolément les unes des autres ou en combinaison les unes avec les autres :
- le manchon a une forme générale allongée le long dudit axe, et comprend une première portion d'extrémité longitudinale reliée à la membrane ;
- le manchon comprend une seconde portion d'extrémité longitudinale, opposée à la première portion d'extrémité, et comportant lesdites premières cannelures ;
- la seconde portion d'extrémité longitudinale comprend une première surface cylindrique externe écartée radialement d'une deuxième surface cylindrique interne du corps et apte à coopérer par butée avec cette deuxième surface, en particulier lors d'un montage et/ou d'un démontage du premier arbre ;
- la seconde portion d'extrémité longitudinale comprend une troisième surface annulaire radiale ou tronconique écartée axialement d'une quatrième surface annulaire radiale ou tronconique du corps et apte à coopérer par butée avec cette quatrième surface, en particulier lors d'un montage et/ou d'un démontage du premier arbre ;
- la membrane a en section axiale une forme générale en C, U ou V dont l'ouverture est orientée parallèlement audit axe ;
- au moins un des éléments parmi le corps et la membrane comprend au moins une rangée annulaire d'orifices de passage d'huile de lubrification ;
- le corps comprend des secondes cannelures rectilignes internes d'accouplement à un second arbre d'un second accessoire, les premières et secondes cannelures étant coaxiales.

La présente invention concerne encore un boîtier d'accessoires pour une turbomachine d'aéronef, comportant au moins un pignon tel que décrit ci-dessus.

La présente invention concerne également une turbomachine d'aéronef, comportant un pignon ou un boîtier d'accessoires tel que décrit ci-dessus.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue très schématique d'un boîtier d'accessoires de turbomachine, sur lequel sont montés des équipements ;
[Fig. 2] La figure 2 est une vue schématique partielle en coupe axiale d'un boîtier d'accessoires et montre un pignon selon la technique antérieure ;
[Fig. 3] La figure 3 est une vue à plus grande échelle du pignon de la figure 2 ;
[Fig. 4] La figure 4 est une vue schématique partielle en coupe axiale d'un boîtier d'accessoires et montre un pignon selon l'invention ; et
[Fig. 5] La figure 5 est une vue en perspective à plus grande échelle du pignon de la figure 4.

### Description détaillée de l'invention

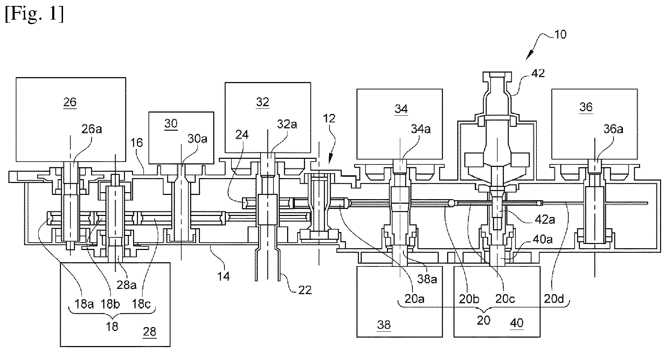

La présente invention se rapporte au domaine général des turbines à gaz et concerne plus particulièrement la configuration d'un boîtier pour l'entraînement d'accessoires d'une turbine à gaz. Le domaine d'application de l'invention est celui des turbines à gaz pour moteurs d'avions ou d'hélicoptères, ainsi que pour les groupes auxiliaires de puissance (ou APU pour *Auxiliary Power Unit).* On se réfère d'abord à la figure 1 qui représente de manière schématique un boîtier d'accessoires 10 pour une turbomachine, telle qu'un turboréacteur, un turbopropulseur ou un turbomoteur d'avion ou d'hélicoptère.

Le boîtier d'accessoires 10 est destiné à transmettre une puissance mécanique originaire de la turbomachine par l'intermédiaire d'un arbre radial sortant de celle-ci, et à le transmettre aux équipements qui sont des pompes, des séparateurs air/huile, des générateurs d'électricité, etc.

Le boîtier 10 comprend un carter 12 comportant une face latérale avant 14 et une face latérale arrière 16 et dans lequel sont montés un premier train d'engrenages 18 composé de trois roues dentées ou pignons 18a-18c engrenant ensemble et un second train d'engrenages 20 composé de quatre roues dentées ou pignons 20a-20d engrenant ensemble.

Un arbre de transmission de puissance 22 est couplé en rotation au premier et au second train d'engrenages au moyen d'une roue dentée ou pignon double 24 et qui émerge de la face latérale avant 14 du boîtier 10.

Dans l'exemple représenté, nullement limitatif, neuf accessoires 26-42 distincts de turbine à gaz sont montés contre les faces latérales du boîtier et comportent chacun un arbre 26a-42a qui est couplé en rotation à l'un des pignons des deux trains d'engrenages.

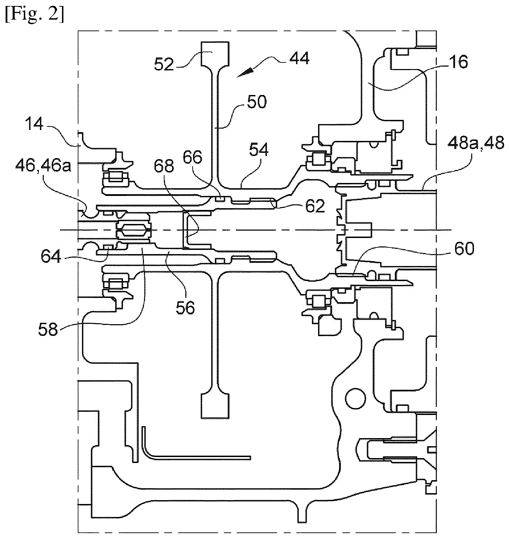

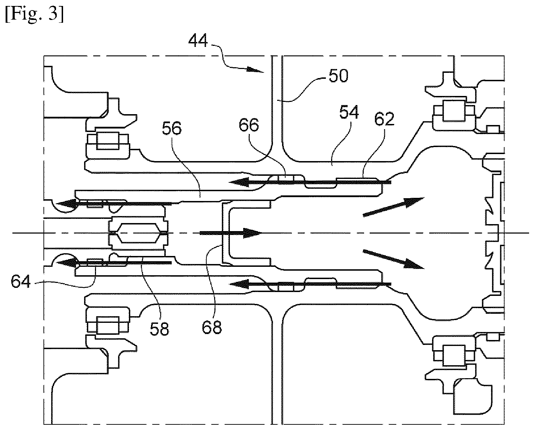

Les figures 2 et 3 montrent un pignon 44 de la technique antérieure.

Ce pignon 44 est ici apte à entraîner deux arbres 46a, 48a coaxiaux de deux accessoires 46, 48 distincts. Les accessoires 46, 48 sont situés respectivement sur les deux faces 14, 16 opposées du carter.

Le pignon 44 comporte un voile annulaire 50 dont une périphérie externe comprend une denture externe 52 et une périphérie interne est reliée à un corps tubulaire 54.

Le pignon 44 comporte en outre un manchon 56 disposé coaxialement à l'intérieur du corps tubulaire 54 et comportant des premières cannelures rectilignes internes 58 d'accouplement à l'arbre 46a de l'accessoire 46. Le corps 54 comprend en outre lui-même des secondes cannelures rectilignes internes 60 d'accouplement à l'arbre 48a de l'accessoire 48.

Le manchon 56 est accouplé au corps par des cannelures 62 qui sont configurées, et en particulier bombées, pour autoriser des déplacements relatifs entre le manchon 56 et le pignon 44, et donc entre l'arbre 46a, l'accessoire 46 et le pignon 44.

Des gorges annulaires 64, 66 de réception de joints toriques sont situées à proximité des cannelures 58, 62 et sont destinées à assurer un certain niveau d'huile de lubrification dans ces cannelures.

Un distributeur 68 d'huile de lubrification est en outre monté à l'intérieur du manchon 56. Les arbres 46a, 48a peuvent être creux et le distributeur 68 comprend des passages axiaux pour l'alimentation en huile ou l'évacuation d'huile des arbres 46a, 48a. Les gorges 64, 68 peuvent en outre être formées dans des bossages annulaires comportant des canaux axiaux de passage d'huile pour la circulation de l'huile à l'intérieur du pignon 44 et du manchon 56 (flèches à double trait de la figure 3).

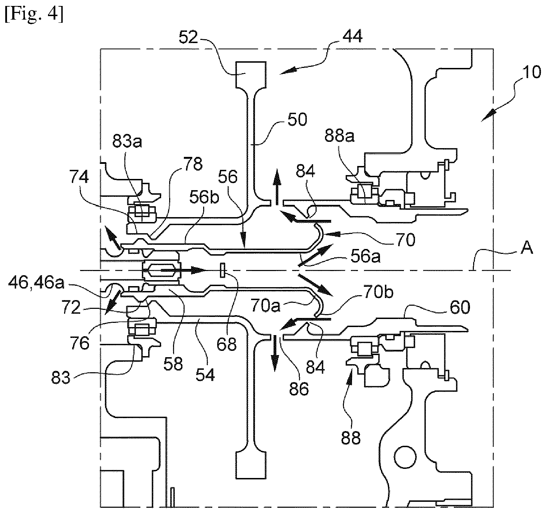

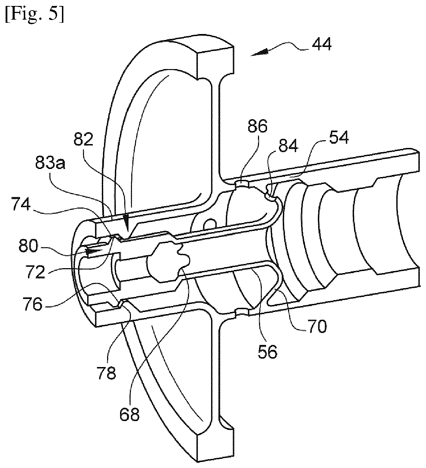

Les figures 4 et 5 illustrent un mode de réalisation de l'invention qui présente une architecture dans laquelle le manchon 56 est formé d'une seule pièce avec le pignon 44. Au moins un des joints toriques de l'architecture présentée dans la technique antérieure peut ainsi être supprimé, de plus le distributeur 68 est selon cette architecture intégré avec le pignon 44. L'architecture de ce mode de réalisation est ainsi plus simple à réaliser vis-à-vis de l'architecture de la technique antérieure.

Selon l'invention, le manchon 56 est relié au corps 54 par une membrane annulaire 70 élastiquement déformable autorisant les déplacements relatifs précités entre le manchon 56 et le corps 54, et donc entre l'arbre 46a et le pignon 44.

Le manchon 56 a une forme générale allongée le long de l'axe A de rotation du pignon 44, et comprend une première portion d'extrémité longitudinale 56a reliée à la membrane 70.

Le manchon 56 comprend une seconde portion d'extrémité longitudinale 56b, opposée à la première portion d'extrémité 56a, et comportant les premières cannelures internes 58.

Cette seconde portion 56b comprend une première surface cylindrique externe 72 écartée radialement d'une deuxième surface cylindrique interne 74 du corps 54 et apte à coopérer par butée avec cette deuxième surface 74, en particulier lors d'un montage et/ou d'un démontage de l'arbre 46.

La seconde portion 56b comprend en outre une troisième surface annulaire radiale ou tronconique 76 écartée axialement d'une quatrième surface annulaire radiale ou tronconique 78 du corps 54 et apte à coopérer par butée avec cette quatrième surface ou tronconique 78, en particulier lors de montage/démontage de l'arbre.

Dans l'exemple représenté, les surfaces 72 et 76 sont portées par un premier bossage annulaire externe 80 du manchon 56, et la surface 78 est portée par un second bossage annulaire interne 82 du corps 54. Le bossage 80 est situé à proximité du bossage 82 et est entouré par la surface 74 du corps 54.

Le corps 54 comprend en outre une surface cylindrique externe 83a de montage d'un palier de guidage 83 porté par le carter du boîtier 10. Cette surface 83a s'étend sensiblement autour des surfaces 72-78 ou des bossages 80, 82.

A l'état libre non déformé, les distances entre les surfaces 72, 74, d'une part, et les surfaces 76, 78, d'autre part, sont par exemple comprises entre 1 et 5 mm.

Lors du montage ou du démontage de l'arbre 46a et son insertion ou son retrait du manchon 56, le manchon peut être amené à se déplacer par rapport au corps 54. Les surfaces 72-78 coopèrent alors entre elles pour limiter les déplacements relatifs et les déformations et sollicitations de la membrane 70.

La membrane 70 a en section axiale une forme générale en C, U ou V dont l'ouverture est orientée parallèlement à l'axe A. Dans l'exemple représenté, cette ouverture est orientée du côté de la seconde portion 56b.

La membrane 70 comprend au moins une rangée annulaire d'orifices 84 de passage d'huile de lubrification en fonctionnement.

Dans l'exemple représenté, la membrane 70 est bi-conique et comprend une paroi tronconique interne 70a évasée vers la première portion 56a, et une paroi tronconique externe 70b évasée vers la seconde portion 56b. La paroi 70a s'étend entre l'extrémité longitudinale du manchon 56 et la périphérie interne de la paroi 70b, et la périphérie externe de cette paroi 70b est reliée au corps 54.

Une portion tubulaire cylindrique du corps 54 s'étend entre la périphérie interne du voile 50 et la paroi 70b et comprend également une rangée annulaire d'orifices 86 de passage d'huile de lubrification en fonctionnement.

Les flèches de la figure 4 illustrent la circulation de l'huile de lubrification en fonctionnement. De l'huile peut être amenée à l'intérieur du manchon 56 par l'arbre 46a qui est creux, ainsi qu'à travers un distributeur 68 qui peut être intégré au manchon 54, comme dans l'exemple représenté, et donc formé d'une seule pièce avec le manchon. Le distributeur 68 se présente ici sous la forme d'une paroi radiale qui est située à l'intérieur du manchon 56 et qui comprend des passages axiaux d'huile.

L'huile peut s'écouler axialement entre les cannelures 58, 60 de l'arbre 46a et du manchon 56. De l'huile peut en outre s'écouler axialement jusqu'à la membrane 70. Du fait des forces centrifuges, cette huile s'écoule sur la membrane 70 et traverse les orifices 84 ainsi que les orifices 86.

Du côté opposé à la surface 83a, le corps 54 comprend une surface cylindrique externe 88a de montage d'un autre palier de guidage 88 porté par le carter du boîtier 10.

Avantageusement, le pignon 44 est réalisé par fabrication additive. Il a en effet une forme complexe qui ne pose pas de problème à réaliser par fabrication additive.

L'invention permet de remplacer l'assemblage de la technique antérieure par une pièce monobloc et néanmoins mobile grâce à la souplesse de la membrane 70. Il y a un gain de masse eu égard à la suppression du ou des joint(s) torique(s) et à la zone d'interface entre les pièces (les cannelures entre le pignon et le manchon). Le nombre de pièces est réduit et la fabrication est simplifiée. Enfin, la fiabilité est également accrue liée à la réduction du nombre de pièces.

## Revendications

1. Pignon (44) d'entrainement d'au moins un arbre (46a, 48a) d'accessoire (46, 48), pour un boîtier d'accessoires (10) de turbomachine d'aéronef, ce pignon s'étendant autour d'un axe (A) et comportant un voile annulaire (50) dont une périphérie externe comprend une denture externe (52) et une périphérie interne est reliée à un corps (54) tubulaire, le pignon comportant en outre un manchon (56) disposé coaxialement à l'intérieur du corps (54) et comportant des premières cannelures (58) rectilignes internes d'accouplement à un premier arbre (46a) d'un premier accessoire (46), le manchon (56) étant apte se déplacer vis-à-vis du corps (54) de façon à autoriser des déplacements relatifs entre le premier arbre (46a) et le pignon, **caractérisé en ce que** le manchon (56) est formé d'une seule pièce avec le corps (54) et est relié au corps (54) par une membrane annulaire (70) élastiquement déformable autorisant lesdits déplacements relatifs.

2. Pignon (44) selon la revendication 1, dans lequel le manchon (56) a une forme générale allongée le long dudit axe (A), et comprend une première portion d'extrémité longitudinale (56a) reliée à la membrane (70).

3. Pignon (44) selon la revendication 2, dans lequel le manchon (56) comprend une seconde portion d'extrémité longitudinale (56b), opposée à la première portion d'extrémité (56a), et comportant lesdites premières cannelures (58).

4. Pignon (44) selon la revendication 3, dans lequel la seconde portion d'extrémité longitudinale (56b) comprend une première surface (72) cylindrique externe écartée radialement d'une deuxième surface (74) cylindrique interne (du corps (54) et apte à coopérer par butée avec cette deuxième surface (74), en particulier lors d'un montage et/ou d'un démontage du premier arbre (46a).

5. Pignon (44) selon la revendication 3 ou 4, dans lequel la seconde portion d'extrémité longitudinale (56b) comprend une troisième surface (76) annulaire radiale ou tronconique écartée axialement d'une quatrième surface (78) annulaire radiale ou tronconique du corps (54) et apte à coopérer par butée avec cette quatrième surface (78), en particulier lors d'un montage et/ou d'un démontage du premier arbre (46a).

6. Pignon (44) selon l'une des revendications précédentes, dans lequel la membrane (70) a en section axiale une forme générale en C, U ou V dont l'ouverture est orientée parallèlement à l'axe (A).

7. Pignon (44) selon l'une des revendications précédentes, dans lequel au moins un des éléments parmi le corps (54) et la membrane (70) comprend au moins une rangée annulaire d'orifices (84, 86) de passage d'huile de lubrification.

8. Pignon (44) selon l'une des revendications précédentes, dans lequel le corps (54) comprend des secondes cannelures (60) rectilignes internes d'accouplement à un second arbre (48a) d'un second accessoire (48), les premières et secondes cannelures (58, 60) étant coaxiales.

9. Boîtier d'accessoires (10) pour une turbomachine d'aéronef, comportant au moins un pignon (44) selon l'une des revendications précédentes.

10. Turbomachine d'aéronef, comportant un pignon (44) selon l'une des revendications 1 à 8 ou un boîtier d'accessoires (10) selon la revendication 9.

## Patentansprüche

1. Ritzel (44) für den Antrieb mindestens einer Welle (46a, 48a) einer Zubehör (46, 48) für einer Zubehörgehäuse (10) einer Luftfahrzeug-Turbomaschine, wobei sich dieses Ritzel um eine Achse (A) herum erstreckt und eine ringförmige Scheibe (50) umfasst, von der ein Außenumfang eine Außenverzahnung (52) umfasst und ein Innenumfang mit einem rohrförmigen Körper (54) verbunden ist, wobei das Ritzel weiter eine Muffe (56) umfasst, die koaxial im Inneren des Körpers (54) angeordnet ist und erste innere geradlinige Keilnuten (58) zum Ankoppeln an eine erste Welle (46a) eines ersten Zubehör (46) umfasst, wobei die Muffe (56) imstande ist, sich gegenüber dem Körper (54) derart zu verschieben, um relative Verschiebungen zwischen der ersten Welle (46a) und dem Ritzel zu erlauben, **dadurch gekennzeichnet, dass** die Muffe (56) aus einem einzigen Stück mit dem Körper (54) gebildet ist und durch eine elastisch verformbare ringförmige Membran (70) mit dem Körper (54) verbunden ist, welche die relativen Verschiebungen erlaubt.

2. Ritzel (44) nach Anspruch 1, wobei die Muffe (56) eine allgemeine langgezogene Form entlang der Achse (A) aufweist und einen ersten Längsendabschnitt (56a) umfasst, der mit der Membran (70) verbunden ist.

3. Ritzel (44) nach Anspruch 2, wobei die Muffe (56) einen zweiten Längsendabschnitt (56b) gegenüber dem ersten Längsendabschnitt (56a) umfasst und die ersten Keilwellen (58) umfasst.

4. Ritzel (44) nach Anspruch 3, wobei der zweite Längsendabschnitt (56b) eine erste äußere zylindrische Oberfläche (72) umfasst, die radial von einer zweiten inneren zylindrischen Oberfläche (74) des Körpers (54) beabstandet ist, und imstande ist, mittels Anschlag, insbesondere bei einer Montage und/ oder einer Demontage der ersten Welle (46a) mit dieser zweiten Oberfläche (74) zusammenzuwirken.

5. Ritzel (44) nach Anspruch 3 oder 4, wobei der zweite Längsendabschnitt (56b) eine dritte radiale oder kegelstumpfförmige ringförmige Oberfläche (76) umfasst, die axial von einer vierten radialen oder kegelstumpfförmigen ringförmigen Oberfläche (78) des Körpers (54) beabstandet ist und imstande ist, mittels Anschlag, insbesondere bei einer Montage und/ oder einer Demontage der ersten Welle (46a) mit dieser vierten Oberfläche (78) zusammenzuwirken.

6. Ritzel (44) nach einem der vorstehenden Ansprüche, wobei die Membran (70) im axialen Querschnitt eine allgemeine Form in C, U oder V aufweist, deren Öffnung parallel zur Achse (A) ausgerichtet ist.

7. Ritzel (44) nach einem der vorstehenden Ansprüche, wobei mindestens eines der Elemente aus dem Körper (54) und der Membran (70) mindestens eine ringförmige Reihe an Öffnungen (84, 86) zum Durchleiten von Schmieröl umfasst.

8. Ritzel (44) nach einem der vorstehenden Ansprüche, wobei der Körper (54) zweite innere geradlinige Keilnuten (60) zum Ankoppeln an eine zweite Welle (48a) eines zweiten Zubehör (48) umfasst, wobei die erste und zweite Keilwellen (58, 60) koaxial sind.

9. Zubehörgehäuse (10) für eine Luftfahrzeug-Turbomaschine, die mindestens ein Ritzel (44) nach einem der vorstehenden Ansprüche umfasst.

10. Luftfahrzeug-Turbomaschine, die ein Ritzel (44) nach einem der Ansprüche 1 bis 8, oder ein Zubehörgehäuse (10) nach Anspruch 9 umfasst.

## Claims

1. Drive pinion (44) of at least one accessory (46, 48) shaft (46a, 48a), for an accessories unit (10) of an aircraft turbine engine, this pinion extending about an axis (A) and comprising an annular wall (50), an outer periphery of which comprises an outer gearing (52) and an inner periphery is connected to a tubular body (54), the pinion further comprising a sleeve (56) disposed coaxially inside the body (54) and comprising first inner rectilinear grooves (58) for coupling to a first shaft (46a) of a first accessory (46), the sleeve (56) being capable of moving opposite the body (54) so as to enable relative movements between the first shaft (46a) and the pinion, **characterised in that** the sleeve (56) is formed of one single part with the body (54) and is connected to the body (54) by an elastically deformable annular membrane (70) enabling said relative movements.

2. Pinion (44) according to claim 1, wherein the sleeve (56) has a general elongated shape along said axis (A), and comprises a first longitudinal end portion (56a) connected to the membrane (70).

3. Pinion (44) according to claim 2, wherein the sleeve (56) comprises a second longitudinal end portion (56b), opposite the first end portion (56a), and comprising said first grooves (58).

4. Pinion (44) according to claim 3, wherein the second longitudinal end portion (56b) comprises a first outer cylindrical surface (72) radially offset from a second inner cylindrical surface (74) of the body (54) and capable of engaging by abutment with this second surface (74), in particular during a mounting and/or a dismounting of the first shaft (46a).

5. Pinion (44) according to claim 3 or 4, wherein the second longitudinal end portion (56b) comprises a third radial or truncated annular surface (76) axially offset from a fourth radial or truncated annular surface (78) of the body (54) and capable of engaging by abutment with this fourth surface (78), in particular during a mounting and/or a dismounting of the first shaft (46a).

6. Pinion (44) according to one of the preceding claims, wherein the membrane (70) has, in the axial cross-section, a general C-, U- or V-shape, the opening of which is oriented parallel to the axis (A).

7. Pinion (44) according to one of the preceding claims, wherein at least one of the elements from among the body (54) and the membrane (70) comprises at least one annular row of orifices (84, 86) for the passage of lubricating oil.

8. Pinion (44) according to one of the preceding claims, wherein the body (54) comprises second inner rectilinear grooves (60) for coupling to a second shaft (48a) of a second accessory (48), the first and second grooves (58, 60) being coaxial.

9. Accessories unit (10) for an aircraft turbine engine, comprising at least one pinion (44) according to one of the preceding claims.

10. Aircraft turbine engine, comprising a pinion (44) according to one of claims 1 to 8 or an accessories unit (10) according to claim 9.
